# EUROPEAN PATENT APPLICATION

(11) **EP 4 772 587 A1**
(43) Date of publication of application: **08.07.2026**
(21) Application number: 23950867.4
(22) Date of filing: 27.12.2023
(51) Int. Cl.: C09D 201/00, C01B 32/05, C01B 32/184, C01B 32/205, C09C 1/44, C09D 5/02, C09D 7/61

(54) **HEATING ELEMENT AND METHOD FOR PRODUCING HEAT-GENERATING COATING MATERIAL**

(30) Priority: 28.08.2023 JP 2023137923
(71) Applicant: Jikan Techno, Inc., Osaka-shi, Osaka 553-0003 (JP)
(72) Inventor: KINOSHITA, Takahiro, Osaka-shi, Osaka 553-0003 (JP)
(74) Representative: Studio Torta S.p.A.
(86) International application number: PCT/JP2023/047033
(87) International publication number: WO 2025/046926

(57) **Abstract**

[Problem] The present invention aims to provide a heat-generating paint that can be produced using a carbon material produced from plant-derived raw materials as a carbon source, thereby reducing CO2 emissions, and to provide a heat-generating paint that can maintain its strength over a variety of temperature ranges.

[Solution] The pigment is a carbon material containing 1 wt% to 50 wt% silicon, produced from plant-derived raw materials containing 5% or more silicon. Furthermore, by mixing carbide 19, which contains many functional groups, with graphene 113 to form a paint pigment, it is possible to supply high-voltage power, such as AC as well as DC, while stabilizing strength.

## Description

### [Technical Field]

The present invention relates to a manufacturing method for a heating element and heat-generating paint for use in heat-generating or conductive applications, manufactured using graphene or carbon materials derived from plant-based raw materials.

### [Background Art]

Heat-generating elements have traditionally been used in a variety of fields. For example, they are used as heat sources in heat press machines, pipe heaters, heat-sealing/laminating devices, drying devices, defogging devices, snow-melting devices, and photocopiers.

Furthermore, converting a heating element into a paint has the advantage of allowing installation without being restricted by shape. Furthermore, considering cost, converting the heating element into a paint offers significant cost benefits, as it can be applied only to the desired area sizes or desired locations.

As such, a variety of inventions have been proposed for heat-generating paints, which offer significant benefits.

For example, Patent Document 1 discloses a heat-generating sheet comprising a heat-generating layer formed on a support, the heat-generating layer being 10 to 150 µm thick, and a plurality of electrodes connected to the heat-generating layer at a distance from one another; the electrodes are sealed with an insulating coating except for the connections to an external circuit; and the sheet has a maximum overall thickness of 500 µm or less. The heat-generating layer of this sheet is formed by applying an aqueous composition containing a conductive material to a resin support that has been treated with corona discharge.

For example, Patent Document 2 discloses an invention for a heat-generating paint primarily composed of a fine carbon material and an inorganic binder, in the aim of providing a heat-generating paint that has high heat generation even at low voltages, can maintain its paint film even in a high temperature range, and is capable of forming a paint film with few breaks.

### [Prior Art Documents]

### [Patent Documents]

[Patent Document 1] JP 2021-163540 A
[Patent Document 2] JP 2020-26458 A

### [Disclosure of the Invention]

### [Problem to be Solved by the Invention]

As described in Patent Document 2, heat-generating paints are composed of inorganic binders and fine carbon materials. Many of these are manufactured from ores, and a problem lies in the fact that they do not contribute to CO2 reduction.

Furthermore, it is necessary to improve resistance to breakage by uniformly dispersing different materials such as the carbon and inorganic materials into a paint. Therefore, if the carbon material ratio is too high in order to reduce resistance, it becomes difficult to increase the strength of the heat-generating paint.

The present invention was made to solve the above problems. **It** aims to provide a heat-generating paint that can contribute to CO2 reduction by using carbon materials manufactured from plant-based raw materials and maintains its strength across a variety of temperature ranges.

### [Means for Solving the Problem]

A method for producing a heat-generating paint, characterized by mixing and dispersing a carbon material produced from plant-based raw materials in a synthetic resin emulsion.

### [Effects of the Invention]

As a result of the above features, the present invention can contribute to CO2 reduction by using a carbon material produced from plant-based raw materials, and can provide a heat-generating paint that maintains its strength over a wide range of temperatures.

### [Brief Description of the Drawings]

Figure 1 is a Raman spectrum of graphene according to an embodiment.
Figure 2 is a Raman spectrum of a carbide according to an embodiment.
Figure 3 is a schematic diagram showing the configuration of a heat-generating element coated with a heat-generating paint according to an embodiment.
Figure 4 is a schematic diagram showing the temperature characteristics of a heat-generating element according to an embodiment.
Figure 5 is a schematic diagram showing the temperature characteristics of a heat-generating element according to an embodiment.
Figure 6 is a schematic diagram showing the configuration of a plasma device according to an embodiment.
Figure 7 is a diagram showing a process flow for producing a carbon material according to an embodiment.
Figure 8 is a diagram showing a process flow for producing a carbon material according to an embodiment.
Figure 9 is a conceptual diagram of another example of the neutralization treatment according to the embodiment.
Figure 10 is a conceptual diagram of another example of the apparatus used in the neutralization treatment according to the embodiment.
Figure 11 is a diagram showing a process flow illustrating the manufacturing process for producing a carbon material according to the embodiment.
Figure 12 is a schematic diagram showing the configuration of another example of a heating element coated with the heat-generating paint according to the embodiment.
Figure 13 is a schematic diagram showing the configuration of another example of a heating element coated with the heat-generating paint according to the embodiment.

### [Form for Carrying Out the Invention]

The heat-generating paint according to the present invention will be described in detail with reference to the drawings.

Note that the embodiments and drawings described below exemplify some of the embodiments of the present invention and are not intended to limit the scope of the present invention. Modifications can be made as appropriate without departing from the spirit and scope of the present invention.

### <Biomass Material>

A plant-based raw material 9 from which graphene is produced will be described. The present invention produces the final product, graphene, using plant-based raw material 9, such as food waste or discarded food waste. Plant-based raw materials 9 are made from plants, wood, etc., but using discarded plant-based raw materials 9, such as harvest residue, as the raw material for graphene production makes it possible to obtain raw materials inexpensively.

**Table 1**

| COMPOSITION TABLE OF PLANT-BASE RAW MATERIAL | C | N | P | P₂O₅ | K | K₂O | Ca | Mg | Na |
|---|---|---|---|---|---|---|---|---|---|
| RICE STRAW | 37.4 | 0.53 | 0.06 | 0.14 | 1.75 | 2.11 | 0.05 | 0.19 | 0.11 |
| WHEAT STRAW | 40.3 | 0.67 | 0.08 | 0.18 | 1 | 1.21 | 0.21 | 0.11 | 0.06 |
| BARLEY STRAW | 41.8 | 0.58 | 0.08 | 0.18 | 1.4 | 1.69 | 0.29 | 0.1 | - |
| RICE BRAN | 40.2 | 1.18 | 0.9 | 2.06 | 1.1 | 1.33 | 0.01 | 0.7 | 0.07 |
| RICE HUSKS | 34.6 | 0.32 | 0.03 | 0.05 | 0.31 | 0.37 | 0.01 | 0.07 | 0.13 |
| BUCKWHEAT STRAW | 40.3 | 1.08 | 0.21 | 0.48 | 3.13 | 3.77 | 1.35 | 0.14 | - |
| SOYBEAN STRAW | 44.5 | 1.23 | 0.12 | 0.28 | 0.75 | 0.9 | 1.39 | 0.64 | 0.2 |
| SWEET POTATO VINES | 42.7 | 3.74 | 0.22 | 0.5 | 3 | 3.62 | 1 | 0.17 | 0.12 |
| TURNIP LEAVES | 39.8 | 3.33 | 0.27 | 0.62 | 4.35 | 5.24 | 1.7 | 0.8 | 0.49 |
| CARROT LEAVES | 41.4 | 2.63 | 0.25 | 0.57 | 4.2 | 5.06 | 0.56 | 0.19 | 0.51 |
| CORN CULMS | 43.8 | 0.92 | 0.09 | 0.21 | 1.32 | 1.59 | 0.24 | 0.12 | - |
| SUGARCANE TOPS | 46.1 | 0.99 | 0.1 | 0.23 | 1.2 | 1.45 | 0.37 | 0.12 | 0.18 |
| COCONUT SHELLS | 46.2 | 3.86 | 0.69 | 1.58 | 2.69 | 3.24 | 0.21 | 0.3 | 0.04 |
| PEANUT SHELLS | 51.1 | 0.75 | 0.02 | 0.06 | 0.47 | 0.57 | 0.17 | 0.05 | 0.05 |
| MANDARIN ORANGE PEELS | 44.5 | 0.76 | 0.05 | 0.11 | 0.58 | 0.7 | 0.4 | 0.06 | 0.07 |
| RED CEDAR SAWDUST | 51.1 | 0.07 | - | - | - | - | - | - | - |
| LARCH BARK | 59.6 | 0.06 | - | - | - | - | - | - | - |
| FALLEN LEAVES OF GINKYO | 50.3 | 0.71 | 0.06 | 0.15 | 0.29 | 0.35 | 1.5 | 0.23 | 0.06 |

Table 1 shows the compositions of plant-based raw materials 9. The percentages of the constituent components of the raw materials shown on the far left are shown on the right. For example, rice straw contains 37.4% carbon (C), 0.53% nitrogen (N), 0.06% phosphorus (P), 0.14% phosphate (P₂O₅), 1.75% potassium (K), 2.11% potash (K₂O), 0.05% calcium (Ca), 0.19% magnesium (Mg), and 0.11% sodium (Na).

The plant-derived, silicon-containing porous plant material 9 undergoes no substantial change when carbonized at low temperatures (above 300°C and below 1000°C), and the pore arrangement can be maintained by removing the silicon. Many plant materials 9 have a structure in which cells are regularly arranged along their axes, with silicic acid deposited on the cell walls, resulting in thickened cells. Furthermore, there are narrow, compressed cell rows between the silicified cell rows, and by removing the silicon and other components after carbonization, it is possible to obtain a carbon material with a high specific surface area. As mentioned above, a plant material with a high silicic acid content of between 13% and 35% is suitable. Too much silicic acid results in less graphene being obtained, so a plant material 9 with a silicic acid content of around 20% is preferable.

Table 1 shows examples of carbon-rich plant materials 9. In addition to rice straw, these include wheat straw, barley straw, wheat husks, barley husks, cocoa husks, cocoa pots. rice bran, rice husks, buckwheat straw, soybean vines, sweet potato vines, turnip leaves, carrot leaves, corn stalks, sugarcane tops, sake lees, coconut shells, coconut lees, peanut shells, mandarin peel, coffee husks, coffee grounds, red cedar sawdust, larch bark, and fallen ginkgo leaves. Plants themselves may also be used instead of residues.

For example, bamboo is a plant whose cellulose is composed of cellulose, hemicellulose, and lignin, and whose minerals include such as, e.g., iron, magnesium, calcium, manganese, copper, and nickel.

Furthermore, when bamboo leaves are calcinated, silanol groups (Si-OH) are extracted, and during the calcinating process they are extracted as SiO₄.

**[Table 2]**

| COMPONENT COMPOSITION TABLE OF PLANT-BASE RAW MATERIAL | | | | | | |
|---|---|---|---|---|---|---|
| MOISTURE | ASH | FAT | LIGNIN | HEMICELLULOSE | CELLULOSE | OTHERS |
| 8~10% | 115~18% | 0.1~0.5% | 18~25% | 16~20% | 30~35% | 15~10% |

**[Table 3]**

| INORGANIC CHEMICAL COMPOSITION TABLE OF PLANT-BASE RAW MATERIAL(wt%) | | | | | | | |
|---|---|---|---|---|---|---|---|
| SiO₂ | Al₂O₃ | CaO | Fe₂O₃ | K₂O | MgO | MnO | Na₂O |
| 92.14 | 0.04 | 0.48 | 0.03 | 3.2 | 0.16 | 0.18 | 0.09 |

Tables 2 and 3 show the chemical compositions of the plant raw material 9 most suitable for the method of producing carbon materials in this invention, among the plant raw materials 9 listed in Table 1 above. Table 2 shows the percentages of the components that make up the raw material. For example, moisture is 8%-10%, ash is 10%-18%, lipids are 0.1%-0.5%, lignin is 18%-25%, hemicellulose is 16%-20%, cellulose is 30%-35%, and others are 5%-10%. Thus, the main components that make up silica ash 19 are lignin, hemicellulose, and cellulose.

Table 3 shows the chemical composition of the inorganic substances in the plant raw material 9 listed in Table 2. The plant raw material 9 listed in Table 2 contains 80 wt% organic matter, such as cellulose, and 20 wt% inorganic matter. The chemical composition of the inorganic material in Table 3 is 92.14 wt% SiO₂, 0.04 wt% Al₂O₃, 0.48 wt% CaO, 0.03 wt% Fe₂O₂, 3.2 wt% K₂O, 0.16 wt% MgO, 0.18 wt% MnO, and 0.09 wt% Na₂O. The plant-based raw material 9 shown in Table 2 contains a large amount of silicon oxide (SiO₂) in the inorganic material.

### (Example)

### <Process Flow 1>

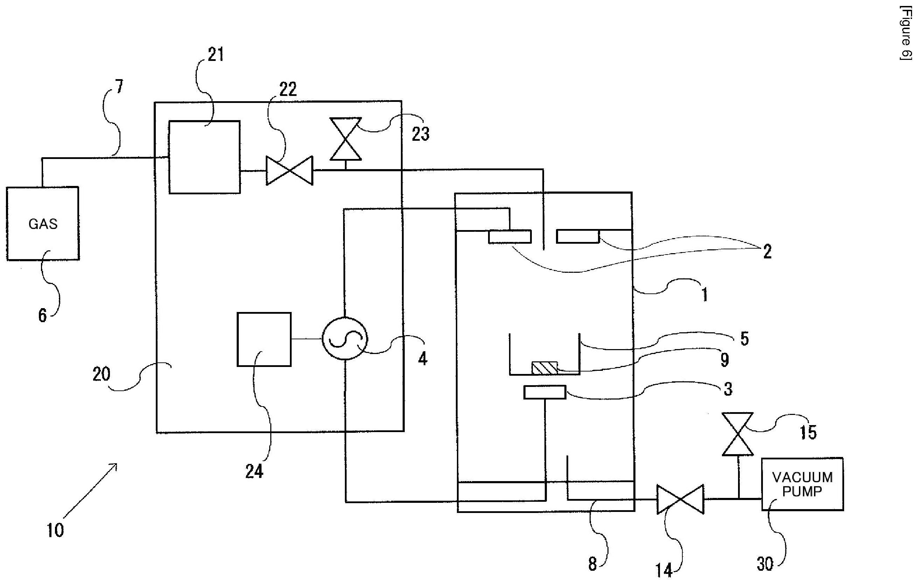

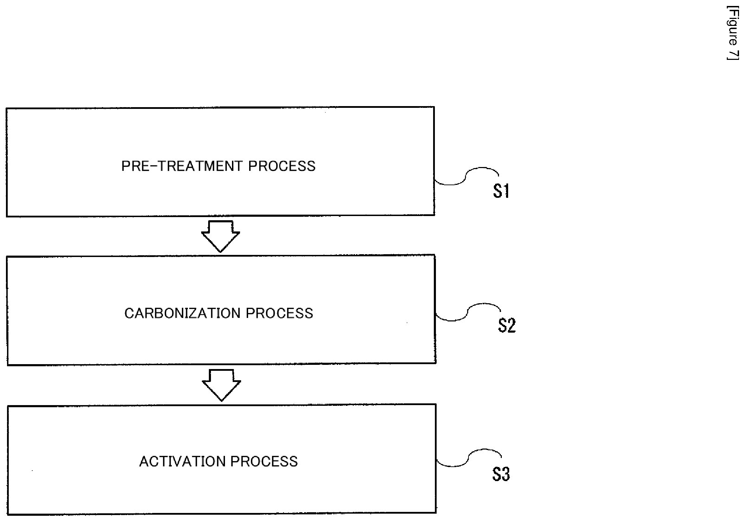

With reference to Figures 6 and 7, the manufacturing process for producing graphene 113 and carbide 19 will be described. Figure 7 shows a process flow illustrating the manufacturing process of an embodiment.

First, in a pre-treatment step S1, after drying the plant-based raw material 9 as described above, the plant-based raw material 9 is crushed. The crushed plant-based raw material 9 is mixed with a granulating agent such as PVA in a ratio of 10:1, and with water to form the plant-based raw material 9 into particles of appropriate size, which are then kneaded together. The mixture is then heated to nearly 100°C on a drying device such as a hot plate to evaporate the water, producing the plant-based raw material 9. Crushing methods include milling, mixers, grinders, etc. In particular, the granulating agent can prevent the plant-based raw material 9 from being bumped by steam during induction heating.

Next, a carbonization step S2 will be described. In the pre-treatment step S1, approximately 0.8 g of plant-based raw material 9 is placed in a crucible 5 and covered with a metal mesh or similar. The crucible 5 is then placed in the designated heating position of a plasma device 10 described above. The pressure inside chamber 1 is reduced to 80 Pa using a vacuum pump 30, and inert gas 6 is purged into chamber 1 at a flow rate of 8 to 10 ml/min, maintaining the pressure inside chamber 1 at 1300 to 1500 Pa. Note that similar graphene can be produced using Examples 1 and 3 in the carbonization step S2.

The highest yield of 36% was measured at temperatures between 500°C and 800°C, with relatively high yields obtained between 300°C and 1000°C. In this measurement, rice straw, bran, coconut shells, rice husks, and peanut shells were used, and similar results were obtained. In the carbonization step S2, the plant-based raw material 9 is carbonized in approximately 10 to 30 minutes by heating at temperatures between 300°C and 1000°C using thermal plasma generated by arc discharge while the inert gas 6 is being introduced.

Next, the activation step S3 will be described. The carbide 19 obtained above was mixed with 5 parts potassium hydroxide by weight with respect to one part of the carbide, placed in a small crucible, and covered. The small crucible was then placed inside a large crucible, surrounded by activated carbon. The activated carbon was embedded to prevent oxygen from entering the small crucible. The heating furnace was heated to nearly 950°C and calcinated for approximately 2-3 hours.

Potassium hydroxide is used here to promote the removal of silicon and thereby improve the yield of the final product, graphene 113. Examples of bases include alkali metal hydroxides such as sodium hydroxide and lithium hydroxide, alkaline earth metal hydroxides such as magnesium hydroxide and calcium hydroxide, alkali metal oxides such as sodium oxide and potassium oxide, alkaline earth metal oxides such as magnesium oxide and calcium oxide, alkali metal sulfides such as sodium sulfide and potassium sulfide, and alkaline earth metal sulfides such as magnesium sulfide and calcium sulfide. Alternatively, incompletely carbonized lignin may be removed using one or more acids selected from the group consisting of hydrochloric acid, sulfuric acid, PTSA, and aluminum chloride.

Among the carbonized material 19 reacted with potassium hydroxide, silicic acid reacts with potassium hydroxide to form potassium silicate. The remaining water-soluble potassium hydroxide (KOH) and potassium silicate are dissolved in water, and the resulting mixture is passed through a filter paper set in a vacuum or reduced-pressure filter to remove silicon oxide (silicon). The dried activation process S3 produced graphene 113, a final product approximately 1/8 to 1/10 by the weight in comparison with the initial plant-based raw material 9 granulated.

The plasma device 10 of this embodiment will be described with reference to Figure 6. Figure 6 is a schematic diagram showing the configuration of the plasma device 10 of this embodiment. The plasma device 10 is primarily composed of an inert gas 6, a control device 20, a chamber 1, and a vacuum pump 30.

The inert gas 6 stored in the gas cylinder is primarily argon, but other gases including helium, neon, and nitrogen are usable. The inert gas 6 can be purged into the chamber 1 via an inlet pipe 7 through a gas volume control device 21. The gas volume control device 21 can adjust the flow rate of the inert gas 6.

The chamber 1 is connected to a control valve 22, and the pressure inside the chamber 1 can be reduced to a vacuum using the vacuum pump 30. The inert gas 6 is connected to the chamber 1 and introduced into the chamber 1. A leak valve 23 is installed between the control valve 22 and the chamber 1, which releases the vacuum inside the chamber 1 to atmospheric pressure. A control valve 14 and a leak valve 15, which releases the vacuum inside the chamber 1 to atmospheric pressure, are also installed between an outlet pipe 8, which introduces air from the chamber 1, and the vacuum pump 30.

A temperature control device 24 controls the high-frequency power supply 4 and manages the temperature and duration inside the chamber 1. The plasma device 10 of this embodiment generates thermal plasma through arc discharge by flowing argon gas (the inert gas 6) as a working gas under low pressure, near-vacuum conditions, and passing a high current between the electrodes (a cathode 2 and an anode 3). A carbon crucible 5 is placed between the cathode 2 and anode 3, and the plant-based raw material 9 (described below) is contained in the crucible 5. The plant-based raw material 9 is heated to temperatures between 300°C and 1000°C by the thermal plasma generated by the arc discharge, and is carbonized in approximately 10 to 30 minutes. In addition to the plasma device described above, other methods for generating thermal plasma including barrier discharge, corona discharge, pulse discharge, and DC discharge may be used.

In the above manufacturing method, a gas-phase reaction occurs. Particularly by mixing a small amount of reactive gas, such as the inert gas 6, functional groups such as -OH (hydroxyl group), -CHO, -C=O (carbonyl group), and -COOH (carboxyl group) are generated, imparting hydrophilicity.

It is to be noted that the manufacturing method is not limited to the above. The heat source may be an induction heater, gas heater, or electric furnace, in addition to the plasma device.

In the case of induction heating, even if the plant-derived raw material 9 contains an insulator such as silicon dioxide (SiO2), the magnetic flux penetrates, making the plant-derived raw material 9 conductive. This heats the plant-derived raw material 9 itself, accelerating the heating and allowing for rapid carbonization. Furthermore, since the insulator, such as silicon dioxide (SiO2), is penetrated by the alternating magnetic flux, the silicon dioxide (SiO2) itself remains intact because it is only heated from the storage box 205 and is not at a melting temperature. Therefore, much of the insulator, such as silicon dioxide (SiO2), remains.

### [Process Flow 2]

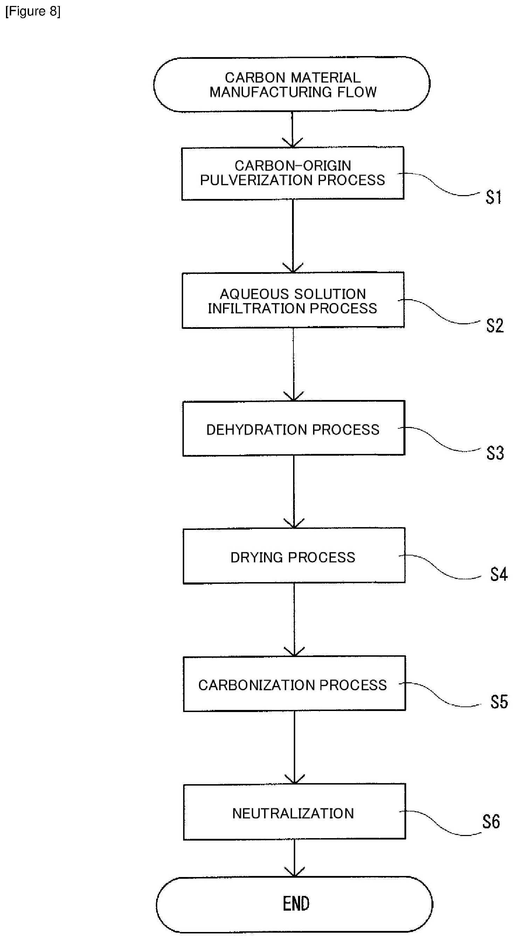

Figure 8 shows the main flow of the manufacturing method for producing carbon material 100. In this example, the method for producing carbon material 100 to be graphene is described based on the flow from S11 to S16.

First, the plant-based raw material 9 is pulverized in a pulverizer. Since the plant-based raw material 9 is then held in a dehydration container 15 with slits, holes, or a mesh, as described below, for dehydration, a carbon-origin pulverization process (S11) is performed to pulverize the plant-based raw material 9 to a degree that does not result in an excessively fine powder. The carbon-origin pulverization process (S11) is sufficient to pulverize the plant-based raw material 9 to a degree that allows the alkaline solution to easily penetrate the plant-based raw material 9 in the next process. Note that step S11 does not necessarily need to be performed first; it may be performed last.

Next, the pulverized plant-based raw material 9 is subjected to an aqueous solution infiltration process (S12), in which the plant-based raw material 9 is reacted with an alkaline aqueous solution 20 at a temperature of 60°C or higher for 1 to 10 hours. A reaction time of approximately 4 hours provides the most efficient production.

Note that step S12 may also be performed by immersing the plant-based raw material 9 in the aqueous solution 20 at room temperature for approximately one week. In this case, it is possible to adjust the pH of the aqueous solution 20 to use a weakly alkaline aqueous solution 20 with a pH of about 9.

The alkaline concentration in the aqueous solution 20 is set to 10-50% by weight. By reacting the plant-derived raw material 9 in this aqueous solution 20, the silica components contained in the plant-derived raw material 9 are primarily removed and extracted into the aqueous solution 20.

This increases the concentration of organic components and increases the ratio of the carbon content of the final carbon material 100 product. The optimal alkaline concentration is 30% by weight, with a pH of approximately 9 to 14. An aqueous solution 20 produced with potassium hydroxide at a pH of 13 is best. The optimal amount of plant-derived raw material 9 added is between 80% by weight and 200% by weight, relative to the potassium hydroxide before dissolving in water.

Alkaline materials include alkalis such as e.g., sodium hydroxide, potassium carbonate, potassium hydroxide, and sodium carbonate. However, the best is potassium hydroxide, which has a pH of 13 and is the same component as potassium contained in plant-derived raw material 9. This is effective for converting carbon material 100 into graphene.

There is a photograph taken through a scanning transmission electron microscope after carbonization at 300°C to 500°C without alkaline treatment. The element distribution shows that Al (aluminum) is scattered in the form of fine particles. K (potassium) is also present as large particles.

Therefore, removing potassium and aluminum improves the purity of the carbon and also leads to improved electrical conductivity. Aluminum, in particular, is easily soluble in alkalis, and can be removed more easily by carbonization at high temperatures. Potassium also dissolves easily in alkalis, so it is best to use potassium hydroxide, the same as potassium.

As such, alkaline materials include alkalis such as e.g., sodium hydroxide, potassium carbonate, potassium hydroxide, and sodium carbonate. However, the best is potassium hydroxide, which has a pH of 13 and is the same component as potassium contained in the plant-derived raw material 9, and is effective for converting the carbon material 100 into graphene.

Next, the alkaline plant-derived raw material 9 is subjected to a dehydration process (S13) to remove the water from the aqueous solution 20. This process does not involve neutralization or rinsing, leaving the alkaline atmosphere intact (S13). Because this process removes the water, it is possible to minimize damage to the equipment or containers, such as crucibles, caused by alkaline water due to evaporation of water during carbonization.

In the dehydration process (S13), the plant-based raw materials 9 that have undergone the aqueous solution permeation process (S12) are placed in a metal, cloth, or plastic dehydration container 15 equipped with a mesh, slits, and/or holes, and then dehydrated in a centrifugal spin-drying machine, similar to laundry. The dehydration container 15 can be any container that allows water to escape to the exterior by centrifugation, and may be bag-, box-, or cylindrical-shaped.

Another dehydration method involves placing the plant-based raw materials 9 in a bag-shaped dehydration container 15 and squeezing the bag to remove water.

Dehydration is performed by centrifugation in a rotary spin-drying device, represented by such as a washing machine (S13). The rotation speed during dehydration is preferably 300 to 3000 rpm, and optimally 500 to 1500 rpm. This centrifugation promotes the destruction of plant cells and the removal of impurities such as silica contained in the plant-based raw material 9.

Next, a drying process (S14) is performed in which the water content of the aqueous solution 20 is removed using a drying device or by drying in the shade. This process leaves the aqueous solution 20 in an alkaline atmosphere without neutralization or rinsing (S14). Because the water content is removed in this process, it is possible to minimize damage to the apparatus or container, such as a crucible, caused by alkaline water due to evaporation of water during carbonization. Note that, since only alkaline water needs to be removed, the drying process (S14) is not necessarily required if the water content can be removed in the dehydration process (S13), although it is preferable to include the drying process.

Next, a carbonization process (S15) is performed in which the plant-based raw material 9 is carbonized in an alkaline atmosphere by flowing gas such as nitrogen or argon gas or sealing the container with carbon felt, etc., in an oxygen-free environment, maintaining a combustion temperature of 1100°C for 5 hours.

In the carbonization step (S15), the higher the temperature, the more rapidly the graphene and graphitization will progress. A combustion temperature of around 1000°C to 2200°C is optimal, and it is sufficient to maintain this temperature for 2 to 10 hours of carbonization.

Furthermore, while metal is often used to contain the plant-derived raw materials 9 in the manufacturing equipment, it is also advisable to use a rotary kiln-type carbonization equipment, induction heating furnace, electric furnace, or other equipment that is resistant to alkalinity, such as a container for containing the plant-derived raw materials 9, thermally sprayed with alumina or made of alumina, to make it resistant to alkalinity.

Compared to conventional activation processes in which the plant-derived raw materials 9 are reacted with a solid alkaline material, the plant-derived raw materials 9 in the state of S13 are less susceptible to direct alkali corrosion of the metal, thereby improving the durability of the manufacturing equipment.

Finally, after carbonization (S15), the carbon material 100 is neutralized (S16) by exposing the material to water or an acidic aqueous solution such as hydrochloric acid, sulfuric acid, or citric acid, thereby removing any remaining silica and other materials (S16). Furthermore, if is then dried and stored in a vacuum, the carbon material 100 can be shipped while maintaining its physical properties, such as electrical conductivity.

In order to improve purity, neutralization (S16) is preferably performed by washing using only water, such as pure water. Neutralization using acids is also possible, but because it is necessary to wash away the acid and remove solids such as silica, neutralization using water (S16) is the most cost-effective option.

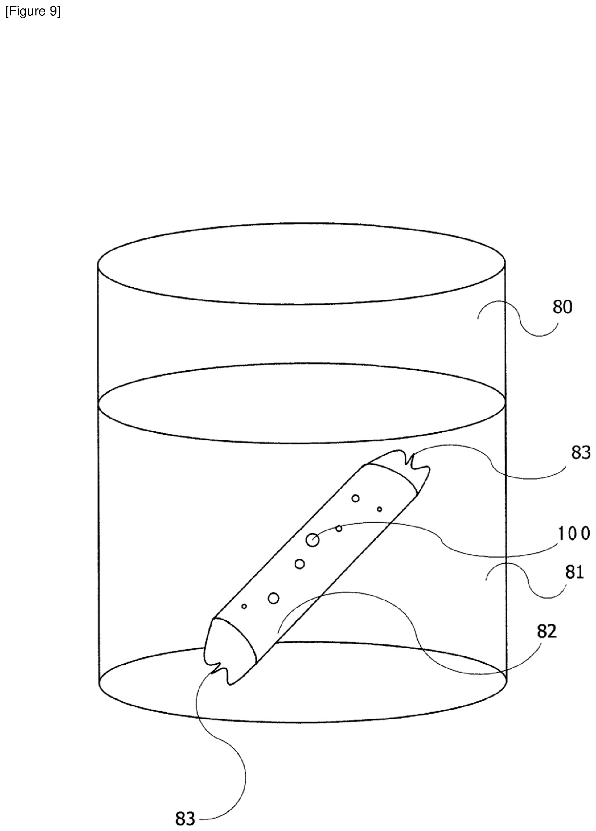

In this process, as shown in Figure 9, pure water 81 is placed in a container 80, and the carbon material 100 and pure water are placed inside a bag-shaped osmosis membrane 82 that only allows water molecules to pass through. Both ends 83 are submerged in the pure water. Pressure balance occurs from the aqueous solution containing impurities, including the carbon material 100, causing the water containing alkaline components to flow through the membrane into the pure water 81. In this way, using the osmosis membrane 82 enables rapid processing.

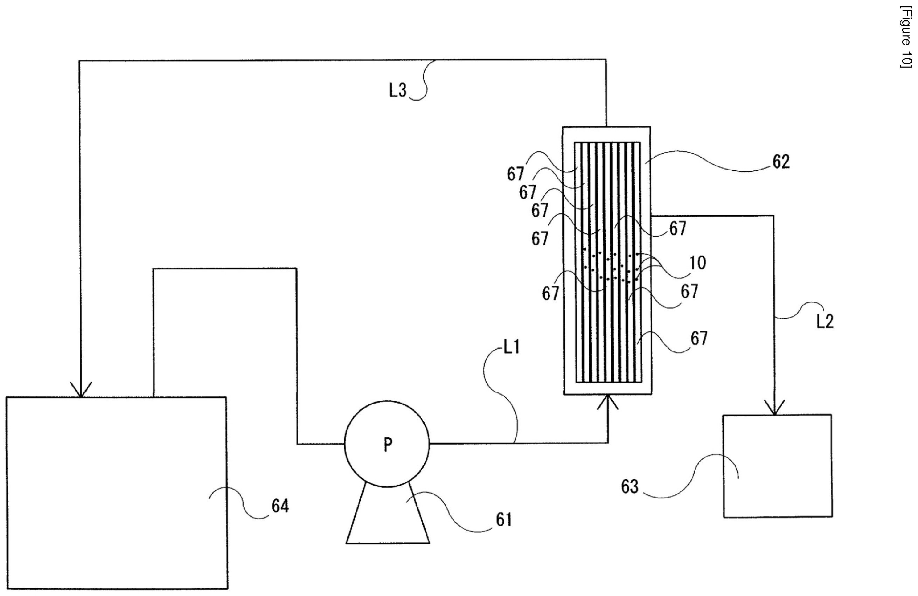

Next, with reference to Figure 10, another example of neutralization treatment (S16) will be described. A solution (L1) containing the carbon material 100 is forced up from a bath 64 containing the carbon material 100 and pure water by a pump 61 and passed through a tube 62 equipped with multiple tubular reverse osmosis membranes 67.

The aqueous solution (L2) containing alkaline components is collected from the tube 62 into a collection container 63, and the aqueous solution (L3) containing the carbon material 100 is returned to the bath 64. The bath 64 is replenished with the same amount of pure water as collected in the collection container 63. In this way, the aqueous solution containing alkaline components is gradually neutralized by circulation.

### <Process Flow 3>

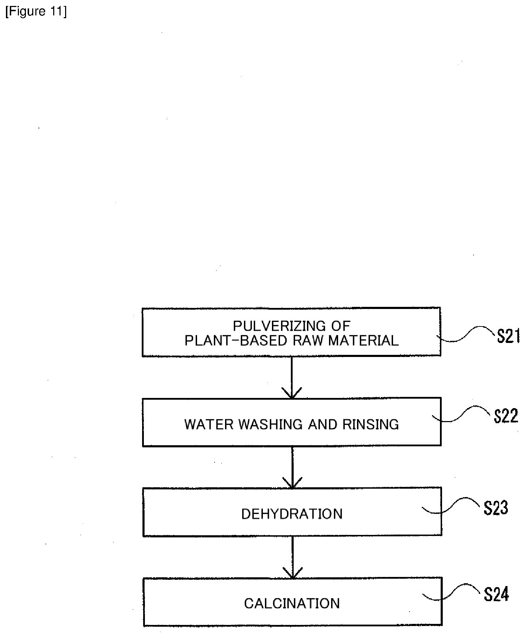

In Example 2, a method for producing carbon material 100 using rice husks, one of the plant-based raw materials 9 of this embodiment, is described with reference to Figure 11. This manufacturing method is particularly suitable for carbon material 100 used as a conductive material.

The plant-based raw material 9 is pulverized. Since the pulverization process (S21) involves pulverization to a degree that allows the particles to penetrate the interior of the material when immersed in water, the particles should be small enough to not slip through the slits or holes in the pulverized material, as they will undergo a dehydration process. The optimal size after pulverization is approximately 5 to 10 mm. Examples of pulverization methods include a mill, mixer, grinder, etc. A specific pulverization process is not required; water, etc., can be absorbed into the raw material during washing.

Next, the pulverized plant-based raw material 9 is washed with water (S22). For example, the rice husks are soaked in pure water. After soaking the rice husks for one hour to one day, stones, mud, etc. are washed away. The liquid temperature should be between room temperature and 80°C. The water washing (S22) can be performed by adding water and then stirring with an agitator.

Alternatively, washing can be performed in adding water little by little while stirring. Agitation can be performed using a vortex device, a device that rotates blades to stir the water, or a device such as, e.g., a stirrer.

Next, the water-washed plant-based raw material 9 is placed in a dehydration vessel 15 described above, and dehydrated using a rotary dehydrator, such as a washing machine (S23). The rotation speed during dehydration should be between 300 and 3000 rpm, with 500 to 1500 rpm being optimal. The gravitational acceleration during centrifugation in the dehydration device should be between 2G and 5 G.

During dehydration, impurities are removed along with the water. The product can then proceed to the subsequent calcinating process without going through the drying process. It was confirmed that this rotational dehydration process also promotes tissue decomposition of the plant-derived raw material 9, allowing the plant-derived raw material 9 to proceed to the next step without any drying step.

Therefore, by eliminating the steps, it became possible to shorten the manufacturing time. Furthermore, when the water is removed by centrifugation during dehydration, the destruction of the cell walls of the plant-derived raw material 9 is promoted, with the destruction reaching further inside.

Therefore, in Example 1, if rotary dehydration is used, the drying step is not necessarily required, but drying reduces the impact of rust and other problems on the machinery.

Next, in the calcinating step (S24), the plant-derived raw material 9 is placed in a furnace, which is filled with argon or nitrogen gas to create an oxygen-free environment. The furnace temperature is raised to 1100°C and maintained at 1100°C for a set period of approximately 1 to 10 hours. The plant-derived raw material 9 is then naturally calcinated for a total calcination time of one day. This produces the carbon material 10.

Furthermore, in the calcination step (S24), the plant-based raw material 9 after the dehydration step (S23) is not completely dry, but rather remains somewhat moist when calcinated. Therefore, so-called steam activation occurs initially, accelerating the destruction and decomposition of cell walls. Steam activation also generates micropores, facilitating the formation of a porous material similar to activated carbon.

Furthermore, during the water washing step (S22), the plant-based raw material 9 is placed in a container such as a pressure cooker and pressurized with water at 2 to 2.45 atmospheres and heated to 120 to 128°C. This quickly destroys the cell walls of the plant-based raw material 9, removing impurities and improving purity.

### (Graphene and Carbonized Material)

The carbonized material 19 obtained in the carbonization step S2 and graphene 113 as the carbon material 100 obtained in the activation step S3, produced in the examples are described below.

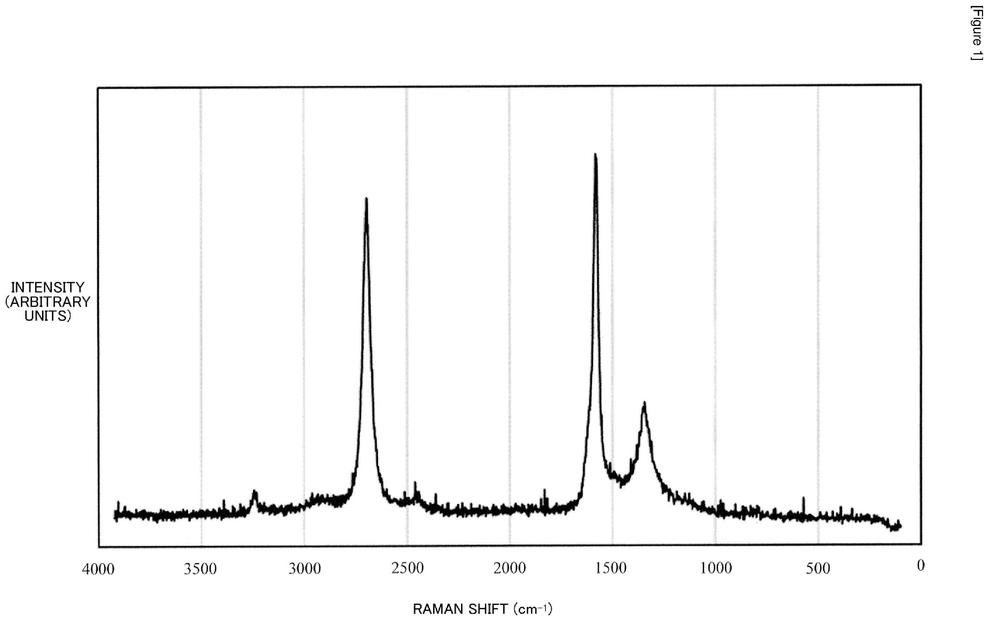

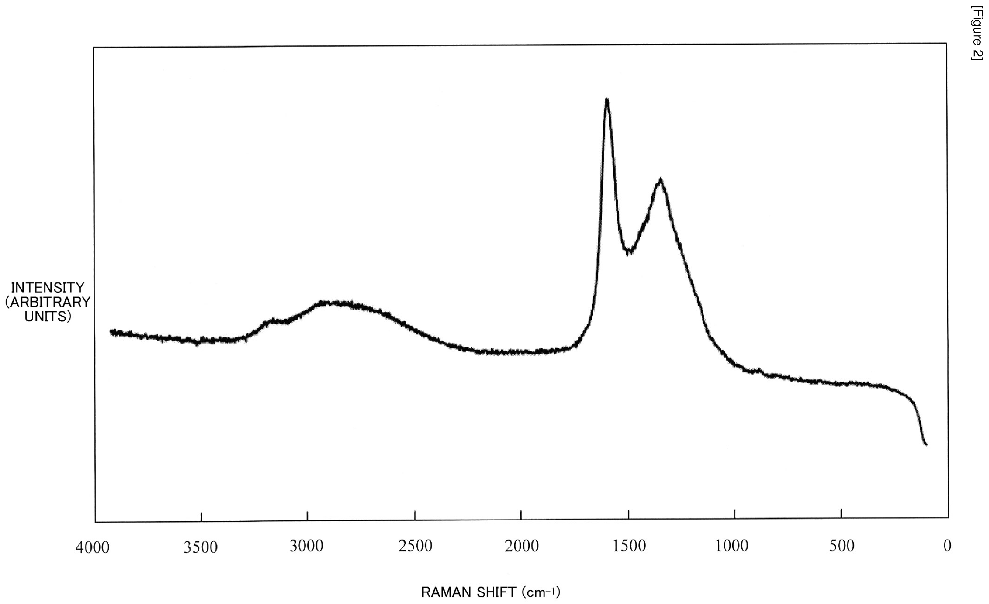

Figure 1 shows the Raman spectrum of graphene 113 obtained using the manufacturing apparatus of the present invention. Figure 2 shows the Raman spectrum of carbide 19 obtained using the manufacturing apparatus of the present invention.

These figures were analyzed using a Raman spectrometer. The obtained data are Raman spectra with the horizontal axis representing wavelength (wavenumber (Raman shift (cm⁻¹))) and the vertical axis representing intensity.

Also, as shown in Table 4, the Raman spectroscopy wavelength peaks are the peak values IG of the G band (2850 cm⁻¹) and ID of the 2D band (1650 cm⁻¹).

As shown in Table 4, the value obtained by dividing IG by ID is 1.68 for graphene 113, indicating that it has fewer layers than the plant-based raw material 9. It was confirmed that carbide 19 in particular contains a large amount of silicon, and that oxygen functional groups such as -OH, -CHO, and -COOH were generated.

The value obtained by dividing IG by ID of graphene 113 is preferably 0.9 or greater, and typically ranges from 0.9 to 2.0.

Thermogravimetric analysis showed that the ash content (excluding carbon) of carbide 19 obtained in carbonization step S2 was high at 37.1 wt%, of which silicon (Si) accounted for 24 wt% to 50 wt% of the ash content of carbide 19 as a whole. Other elements included K at 0.51 wt% to 7 wt%, Al at 0.1 wt% to 1.6 wt%, Ca at 0.17 wt% to 0.5 wt%, and Fe at 0.4 wt%, with Cr, Ni, Mn, Mg, P, S, and Na at 0.1 wt% or less.

Carbonized material 19 obtained in carbonization step S2, without the activation step S3 serving as a so-called activation treatment, contains a large amount of silicon. When carbonized in the inert gas, it is not strongly reduced and becomes SiO2-x, which then bonds with aromatic -OH groups and the like in the form of -O-Si-O-R to form a lignin-polysaccharide complex, presumably easily taking the form of C/SiOx.

Furthermore, according to thermogravimetry, the ash content of graphene 113 obtained in activation step S3 (described below) is high, ranging from 1% to 24 wt%, excluding carbon. Of this, silicon (Si) accounts for 1 wt to 20 wt% of the graphene 113 as a whole. Other elements included 4.3 wt% K, 1.5 wt% Al, 1.3 wt% Ca, and 0.4 wt% Fe, with P, Mn, Cl, S, and Mg each being less than 0.1 wt%.

As described above, the amount of silicon in the graphene 113 and carbide 19, which are carbon material 100, is high, ranging from 1 wt% to 50 wt%.

**[Table 4]**

| | GRAPHENE | CARBIDE |
|---|---|---|
| MESOPORE VOLUME (ml/g) | 0.487 | 0.259 |
| MICROPORE VOLUME (ml/g) | 0.46 | 0.27 |
| SPECIFIC SURFACE AREA (m²/g) | 1780 | 726.4 |
| POWDER RESISTIVITY (Ω ·cm) | 1.0 × 10⁻² | 4.83 × 10^{2~5} |
| TRUE DENSITY (g/cm³) | 2.56 | 2.27 |
| IG/ID | 1.13 | - |

As shown in Table 4, the results of CO2 adsorption/desorption measurements confirmed that graphene 113 and carbide 19 had fine pores with diameters primarily ranging from 0.8 nm to 2 nm.

This suggests that they are more likely to adsorb metal ions and other contaminants. Furthermore, as shown in Table 4, the mesopore volumes measured by gas adsorption and water vapor adsorption measurements were 0.487 ml/g for graphene 113 and 0.259 ml/g for carbide 19. Furthermore, the micropore volumes were 0.46 ml/g for graphene 113 and 0.27 ml/g for carbide 19.

Furthermore, as shown in Table 4, the particles of graphene 113 and carbide 19 exhibited diameters ranging from 15 µm to 229 µm, with a median diameter of approximately 110 µm, calculated as the median of the integrated values of the distribution.

As a result, a mesopore volume of 0.2 ml/g to 0.6 ml/g is formed. Graphene 113, after the activation treatment to remove impurities (described below), exhibits a particularly high value, suggesting that mesopores and micropores grow due to the removal of silicon.

Furthermore, as shown in Table 4, the specific surface area measured by the water vapor adsorption measurement method, according to the BET method, is 1792 m²/g for graphene 113, ranging from 890 m²/g to 2000 m²/g. Carbide 19 exhibits 726.4 m²/g, ranging from 890 m²/g to 1500 m²/g. Both have a large specific surface area, and graphene 113 after the silicon component (Si) has been removed has an even larger specific surface area. As a result, graphene 113 has a stronger adsorption effect.

Furthermore, carbide 19 can exist in two states: one in which the elemental component Si (silicon) is contained in minute amounts on or within carbide 19 in the form of Si (silicon) or silicon dioxide (SiO2), and the other in which Si (silicon) or silicon dioxide (SiO2) aggregates on or within carbide 19. By subjecting carbide 19 to activation treatment, the carbon purity and specific surface area are increased.

As shown in Table 4, the true densities measured using a gas displacement density measurement device were 2.56 g/cm³ for graphene 113 and 2.27 g/cm³ for carbide 19. The bulk density of graphene 113 was 0.21 to 0.29 g/cm³.

Furthermore, the powder resistivity measured using the double-ring method and the four-terminal method was 1.27×10³ to 10⁵ Ω·cm for carbide 19, while the removal of silicon resulted in 1.0×10⁻² Ω·cm for graphene 113, improving conductivity. While the lower the resistance, the better, the optimal value for graphene 113 is 1.0×10⁻³ Ω·cm to 3.8×10⁻² Ω·cm.

Furthermore, by leaving a large amount of silicon in carbide 19, it becomes more easily dissolved in substances that are easily adsorbed by silicon, thereby improving its insulating performance.

### (Heat-generating Paint)

The following describes a heat-generating paint manufactured using the above-mentioned carbon material 100 (carbide 19 and graphene 113) as a pigment.

The applicant conducted tests on various types of paint to determine the optimal conditions. Tests were conducted on two-liquid solvent-based paints, one-liquid solvent-based paints, and one-liquid water-based paints in this example.

**[Table 5]**

| | TWO-LIQUID SOLVENT-BASED PAINT | | ONE-LIQUID SOLVENT-BASED PAINT | | ONE-LIQUID SOLVENT-BASED PAINT | |
|---|---|---|---|---|---|---|
| BINDER | ACRYLIC URETHANE | | SILICONE | | ACRYLIC EMULSION | |
| SOLVENT | XYLENE | | XYLENE | | WATER | |
| PIGMENT SPECIES | CARBIDE 19 | GRAPHENE 113 | CARBIDE 19 | GRAPHENE 113 | CARBIDE 19 | GRAPHENE 113 |
| LIMITING AMOUNT (wt%) | 47 | 31 | 52 | 30 | 30 | 15 |
| PWC VALUE (wt%) | 73 | 63 | 71 | 60 | 56 | 33 |

As shown in Table 5, the two-liquid solvent-based paint uses acrylic urethane as the binder and xylene as the solvent for dilution. The aforementioned carbon material 100 (Carbide 19 and Graphene 113) was used as the pigment. This two-liquid solvent-based paint is cured using a curing agent.

The one-liquid solvent-based paint uses silicone as the binder, xylene as the solvent, and the aforementioned carbon material 100 (Carbide 19 and Graphene 113) as the pigment. This one-liquid solvent-based paint is heat-cured and has excellent heat resistance, with a heat resistance of up to 150°C.

The one-liquid water-based paint uses acrylic emulsion as the binder, water as the solvent, and the aforementioned carbon material 100 (Carbide 19 and Graphene 113) as the pigment.

In addition, the binder was gradually added to the carbon material while stirring with a disperser, and the limiting amount at which the stirred solution remained liquid was determined. The pigment weight concentration (PWC value) at that time was also calculated.

**[Table 6]**

| | | TWO-LIQUID SOLVENT-BASED PAINT | | | | | | | ONE-LIQUID SOLVENT-BASED PAINT | | | | | | ONE-LIQUID SOLVENT -BASED PAINT | |
|---|---|---|---|---|---|---|---|---|---|---|---|---|---|---|---|---|
| | | CB19 | | | | GP113 | | | CB19 | | | GP113 | | | CB 19 | GP 113 |
| | | <67> | <50> | <25> | <10> | <56> | <25> | <10> | <71> | <50> | <25> | <60> | <50> | <25> | <56> | <33> |
| DRIED FILM THICKNESS | AVG. (µm) | 78 | 67 | 57 | 54 | 74 | 63 | 53 | 91 | 62 | 54 | 87 | 74 | 50 | 69 | 52 |
| | MAX (µm) | 76 | 62 | 53 | 51 | 70 | 61 | 50 | 82 | 58 | 48 | 76 | 70 | 49 | 67 | 47 |
| | MIN (µm) | 80 | 74 | 63 | 60 | 79 | 69 | 56 | 100 | 66 | 61 | 93 | 79 | 59 | 72 | 63 |
| APPEARANCE | | ○ | | △ | | ○ | | △ | ○ | | △ | ○ | | △ | × | |
| FILM-FORMING PROPERTY | | ○ | | | | ○ | | | ○ | | | ○ | | | ○ | △ |
| GLOSS | | <1 | 2 | 18 | 57 | <1 | 3 | 31 | <1 | 4 | 33 | <1 | <1 | 3 | 2 | 2 |
| FLEXIBILITY | | × | | ○ | | ○ | | | ○ | | | ○ | | | ○ | |

| | | | | | | | | | | | | | | | | |
|---|---|---|---|---|---|---|---|---|---|---|---|---|---|---|---|---|
| CB19 : CARBIDE 19 GP113 : GRAPHENE 113 | | | | | | | | | | | | | | | | |

As shown in Table 6, each carbon material and each coating film with different PWC values were evaluated. First, 10g of each limiting liquid was placed on a tin plate, and the binder and hardener were mixed to achieve the PWC value set within the < > range. The mixture was then stirred with a spatula to form a coating. The dried film thickness was then measured. The coating was visually inspected for unevenness, cracks, color, and gloss spots. Circle-mark indicates no defects; triangle-mark indicates some defects; and x-mark indicates noticeable defects.

Film-forming properties were evaluated by scratching the coating surface with a fingernail or other object to determine whether the coating peeled off. Circle-mark indicates no peeling; x-mark indicates peeling.

Gloss is the result of measuring the 60-degree gloss value. Sign <1 indicates a value less than 1.

Furthermore, film properties were measured by scratching the coating surface with a fingernail or similar to determine whether the coating is peeled off. Circle-mark indicates no peeling, and x-mark indicates peeling.

Flexibility was evaluated by forming a coating on paper and bending the paper to determine whether cracks or breaks occurred in the coating at the peaks. Circle-mark indicates no cracks or breaks, and x-mark indicates some cracks or breaks.

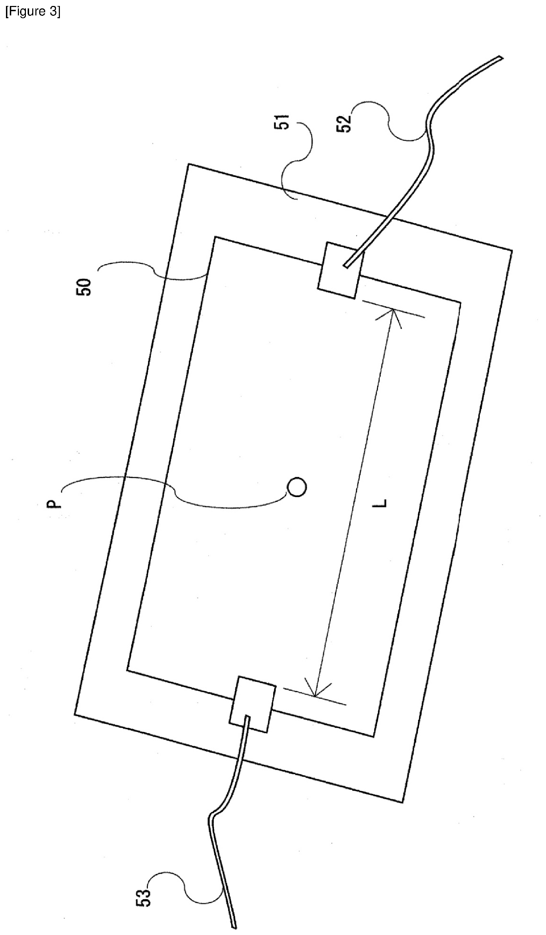

Next, we will explain its performance as a heat-generating paint. Figure 3 shows the above-mentioned one-liquid solvent-based heat-generating paint 50 applied to an insulator 51, such as paper, cloth, or plastic resin. A positive electrode 52 and a negative electrode 53 are attached to the center of the heat-generating paint 50, and applying power to these electrodes generates heat at the applied area. The distance H between the electrodes is 4.5 cm and the area covered with paint is 22.5 cm².

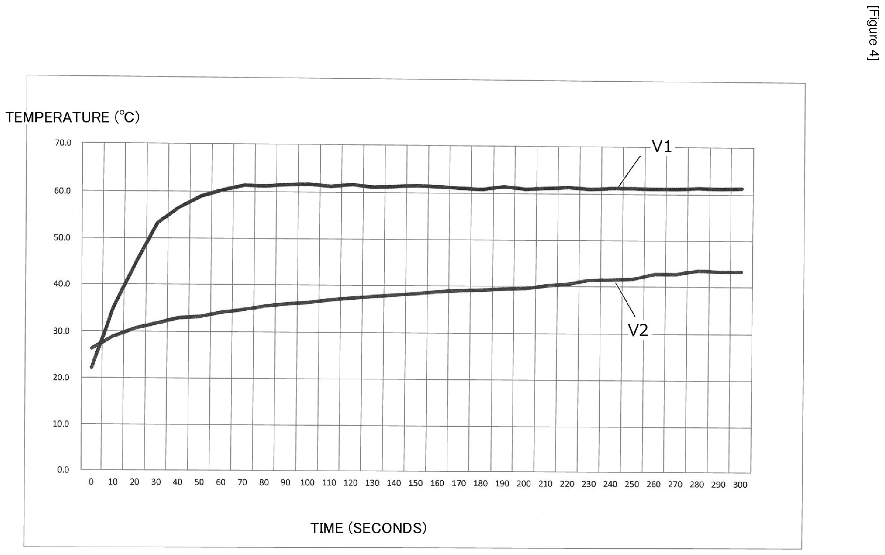

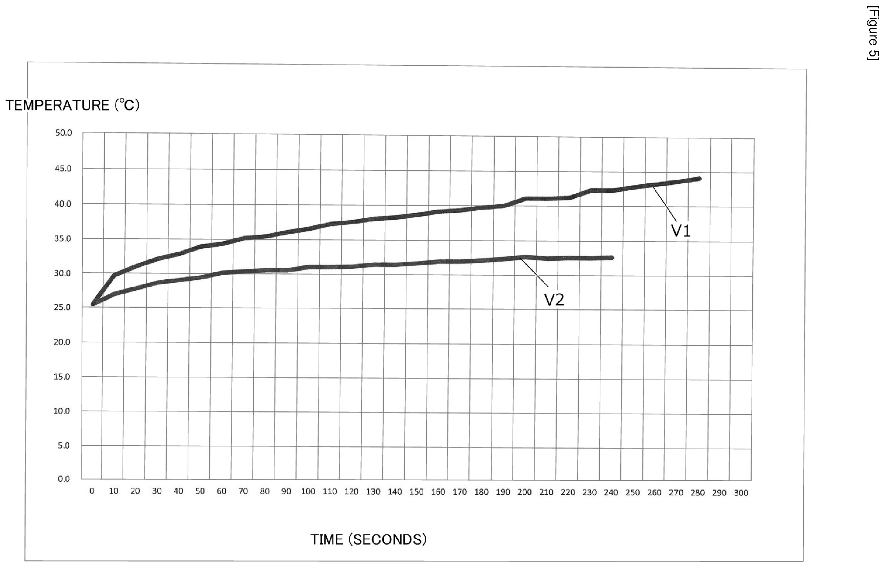

FIGS. 4 and 5 show the heat-generating characteristics of the heat-generating paint 50.

FIG. 4 is a graph of time (seconds) versus temperature (°C) for a heating element 40 with a coating thickness of 160 µm to 175 µm. V1 is a temperature graph measured at point P in FIG. 3 when DC 20 V was supplied. The power value was 4 to 4.8 W, and the temperature rises from room temperature of 22.1°C to a maximum of approximately 62°C in approximately 300 seconds.

V2 is a temperature graph measured at point P in FIG. 3 when DC 12 V is supplied. The power value is 2 to 2.4 W, and the temperature increases from room temperature of 26.3°C to a maximum of approximately 43.4°C in approximately 300 seconds.

FIG. 5 is a graph of time (seconds) versus temperature (°C) for a heating element 40 with a coating thickness of 60 µm to 75 µm. V1 is a temperature graph measured at point P in Figure 3 when DC 20V was supplied. The power value was 1.6W to 2.0W, and the temperature increased from room temperature of 25.4°C to a maximum of approximately 44.1 °C in approximately 280 seconds.

V2 is a temperature graph measured at point P in Figure 3 when DC 12V was supplied. The power value was 0.6W, and the temperature rose from room temperature of 25.4°C to a maximum of approximately 32.6°C in approximately 240 seconds.

Because carbon material 100 contains a large amount of silicon, it is possible to improve the strength and electrical resistance of the paint without the need to add inorganic materials later. In particular, heat-generating paints containing silicon in the carbon material maintain the continuity of the paint film even when heated to high temperatures, making it possible to create highly heat-resistant planar heaters.

Furthermore, by mixing carbide 19 containing many functional groups with graphene 113 to use as a paint pigment, it is possible to supply high-voltage power such as AC as well as DC while stabilizing strength.

Furthermore, carbide 19 containing many functional groups makes dispersion and mixing easier when adjusting resistance. A mixing ratio of carbide 19 to graphene 113 of approximately 0.5:9.5 to 3:7 is recommended. Furthermore, carbon material 100 with a powder resistivity in the range of 1.0 x 10⁻³ Ω·cm to 3.8 x 10⁻² Ω·cm can be used alone or in combination with other carbon materials 100.

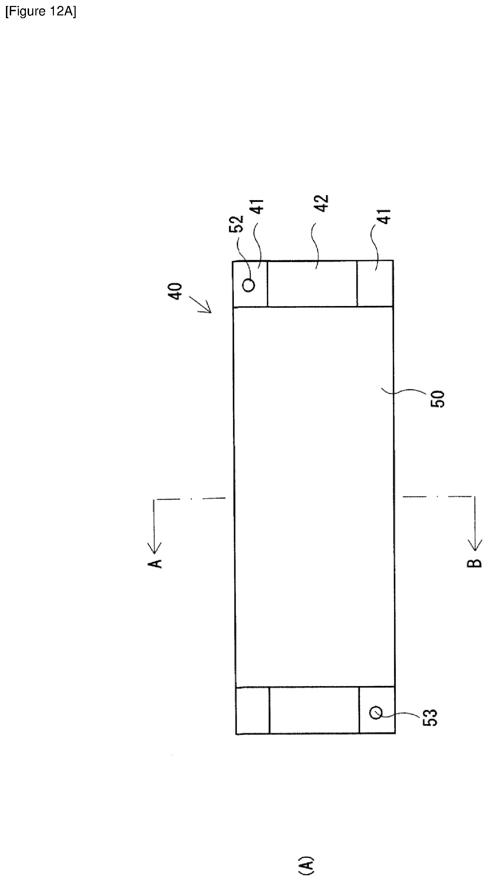

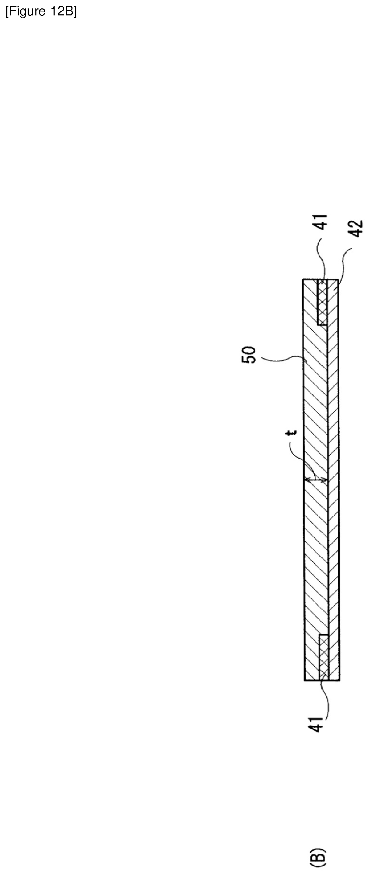

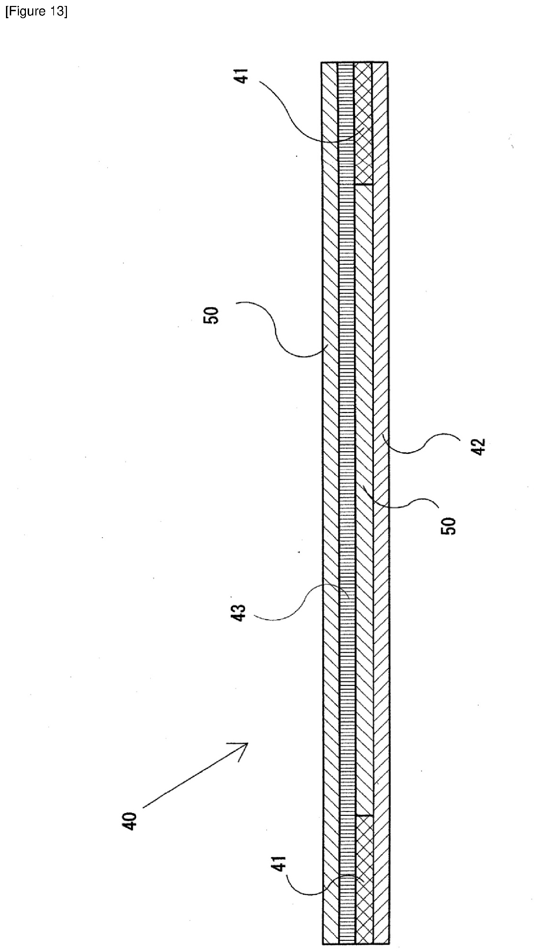

Next, Figures 12 and 13 show another example of a heating element 40. Figure 12(A) is a front view of the heating element 40. Figure 12(B) is a cross-sectional view of the heating element 40 taken along line A-B in the front view. The heat-generating paint 50 was made by mixing and kneading carbon material 100 at a ratio of 10% to 75% by weight into a synthetic resin emulsion, typically vinyl chloride, vinyl acetate, or acrylic. The optimal ratio was a carbon ratio of 20% to 60% by weight. It may also be dispersed using water.

The coating thickness t was 500 µm to 1000 µm. The ideal coating thickness is 100 µm to 1500 µm, and can be adjusted depending on the resistance value and the application area. When using an acrylic emulsion, a thick coating was possible.

The heating element 40 shown in Figure 12 has a positive electrode 52 and a negative electrode 53 formed on a wiring 41, which uses copper foil, silver foil, copper or silver paste, or conductive wire, on a substrate 42. The substrate 42 may be glass, ceramic, concrete, cement, cloth (glass fiber, cotton polyester), plastic, etc. The heat-generating paint 50 was applied to the substrate and electrodes and allowed to dry.

The heating element 40 was 56 cm long, 4 cm wide, and had 1 cm-wide electrodes. The overall resistance between the electrodes was 1 Ω to 20 Ω. When DC 12 V was applied, temperature increase of 20°C to 80°C as from room temperature was observed at approximately 24W of power. The carbon material 100 most suitable for heat-generating paint was found to be a plant-based raw material 9, such as cocoa husks, barley husks, or wheat husks, burned at a combustion temperature of 900°C to 1500°C.

The heating element 40 shown in Figure 13 has a positive electrode and a negative electrode formed on the wiring 41 made of copper foil, silver foil, aluminum foil, copper or silver paste, or conductive wire on the substrate 42. The substrate 42 may be glass, ceramic, concrete, cement, cloth (glass fiber, cotton polyester), aluminum tape, plastic, etc.

A nonwoven fabric 43 was laid on top of the substrate 42 and the wiring 41, and then the heat-generating paint 50 was applied and dried. The nonwoven fabric 43 was thin enough to be transparent, and made of a material that allowed the heat-generating paint 50 to pass through. The thickness of the nonwoven fabric 43 should be 10 g/m² to 30 g/m².

Various materials, including polyester, polypropylene, polyethylene, rayon, nylon, and wool, can be used for the nonwoven fabric 43. The heat-generating paint 50 can pass through the nonwoven fabric 43, so when viewed from the cross section, the nonwoven fabric 43 and the heat-generating paint are mixed together.

The heating element 40 was 50 cm long, 4 cm wide, and had electrodes 1 cm wide. The overall resistance between the electrodes was 1 Ω to 20 Ω. When DC 12V was applied, temperature increase of 20°C to 90°C from room temperature was observed at around 24W of power. Here, the carbon material 100 most suitable for heat-generating paint was obtained by burning plant-based raw materials 9, such as cocoa husks, barley husks, and wheat husks, at combustion temperatures between 900°C and 1500°C.

Other heat-generating paints 50 may be those in which carbon material 100 is mixed with an aqueous solution of sodium silicate diluted with water. This is particularly ideal for carbon materials 100 obtained by carbonizing plant-based raw materials 9 containing 5% to 20% silicon. The silicon contained in carbon material 100 dissolves in the sodium silicate, improving conductivity and strength. Furthermore, since it is also ideal as a fireproof paint, it can reduce the risk of fire when used as a heat-generating paint.

Wheat and barley husks, cocoa husks, and sake lees were burned in an oxygen-free environment at temperatures between 1000°C and 1500°C. Additionally, the specific surface area was measured using the BET adsorption isotherm based on the amount of nitrogen adsorbed at liquid nitrogen temperature.

The results showed that wheat and barley husks, cocoa husks, and sake lees had specific surface areas ranging from 15 m²/g to 80 m²/g. This low specific surface area allows for better dispersibility in emulsions such as acrylic, resulting in uniformly mixing of the carbon material and improved conductivity. Furthermore, improved dispersibility improves the dispersion of the coating film, ensuring its strength.

### [Industrial Applicability]

Industrial applications of the heat-generating paint of the present invention include heat-generating paints for construction such as concrete, heat-generating paints, and conductive paints for batteries, circuit boards, and heat-dissipating materials.

### [Explanation of Symbols]

1. Chamber
2. Cathode
3. Anode
4. High-frequency power supply
5. Crucible
6. Inert gas
7. Inlet pipe
8. Outlet pipe
9. Plant-derived raw material
10. Plasma device
14. Control valve
15. Leak valve
19. Carbide
20. Control device
21. Gas volume control device
30. Vacuum pump
40. Heating element
42. Substrate
50. Heat-generating paint
51. Insulator
52, 53. Electrodes
100. Carbon material
113. Graphene
S1. Pretreatment process
S2. Carbonization process
S3. Activation process.

## Claims

1. A method for producing a heat-generating paint, comprising mixing and dispersing a carbon material produced from a plant-derived raw material in a synthetic resin emulsion.

2. The method for producing a heat-generating paint as recited in claim 1, **characterized in that** the weight percentage of the carbon material is 10 to 75 wt %.

3. The method for producing a heat-generating paint as recited in claim 1, wherein the carbon material containing a functional group is used as a pigment.

4. The method for producing a heat-generating paint as recited in claim 1, comprising: a washing step in which the plant-derived raw material is immersed in water, agitated, and washed with water;
a dehydration step in which, after the washing step, the plant-derived raw material is placed in a container and rotated in a rotary dehydrator to remove water from the plant-derived raw material;
a calcinating step in which, after the dehydration step, the plant-derived raw material is calcinated.

5. The method for producing a heat-generating paint as recited in claim 4, **characterized in that** the rotation speed of the dehydrator is 300 rpm to 3000 rpm.

6. The method for producing a heat-generating paint according to claim 1, which contains a carbon material with a powder resistivity of 1.0 x 10⁻³ Ω-cm to 3.8 x 10⁻² Ω-cm.

7. The method for producing a heat-generating paint according to claim 4, wherein the calcinating step involves combustion in an oxygen-free state at a temperature of 1000°C or higher.

8. The method for producing a heat-generating paint according to claim 1, wherein the plant-derived raw material is wheat or barley husks, cocoa husks, or sake lees, and the carbon material burned in an oxygen-free state at a temperature of 1000°C to 1500°C has a specific surface area of 15 m²/g to 80 m²/g.
